# EUROPÄISCHE PATENTSCHRIFT

(11) **EP 1 574 624 B1**
(45) Veröffentlichungstag und Bekanntmachung des Hinweises auf die Patenterteilung: **29.04.2009**
(21) Anmeldenummer: 05101398.5
(22) Anmeldetag: 24.02.2005
(51) Int. Cl.: E02D 5/80

(54) **Bodenanker zur Halterung von Kanthölzern**
Ground anchor for supporting square timber
Dispositif d'ancrage dans le sol pour supporter du bois équarri

(30) Priorität: 27.02.2004 DE 202004003022 U
(43) Veröffentlichungstag der Anmeldung: 14.09.2005
(73) Patentinhaber: Gust. Alberts GmbH & Co. KG, 58849 Herscheid (DE)
(72) Erfinder: Alberts, Dietrich, 58849, Herscheid (DE)
(74) Vertreter: Beckmann, Jürgen

(56) Entgegenhaltungen:
- WO-A-93/12312
- US-A- 4 863 137

## Beschreibung

Die Erfindung betrifft einen Bodenanker zur Halterung von Kanthölzern mit einem im Boden befestigbaren Ankerstiel.

Aus der WO 93/12 312 A1 sind Pfostenträger mit einem Ankerstiel bekannt, welcher in einem Betonböden oder im Erdboden befestigt werden kann und an dessen oberem Ende ein L-förmiger oder ein U-förmiger Winkel angeschweißt ist. Auf den Winkel können senkrecht stehende Pfosten gestellt werden, wobei die senkrecht hochstehenden Schenkel der Winkel in horizontaler Richtung einen Anschlag bilden und zwei Löcher aufweisen, durch welche der Pfosten mit Nägeln oder Schrauben fixiert werden kann.

Vor diesem Hintergrund war es Aufgabe der vorliegenden Erfindung, einen Bodenanker bereitzustellen, mit welchem insbesondere Kanthölzer in horizontaler Lage, wie sie zum Beispiel in Holzterrassen vorkommen, montiert werden können.

Diese Aufgabe wird durch einen Bodenanker mit den Merkmalen des Anspruchs 1 gelöst. Vorteilhafte Ausgestaltungen sind in den Unteransprüchen enthalten.

Der erfindungsgemäße Bodenanker dient der Halterung von Kanthölzern, und zwar insbesondere solchen, die im montierten Zustand horizontal verlaufen. Er umfasst die folgenden Komponenten:
- Einen im Boden befestigbaren Ankerstiel, wobei der Begriff "Boden" für alle Arten von Untergrund wie insbesondere Erdböden, Steinböden oder Betonböden stehen soll. Der Ankerstiel kann optional als ein Schraubanker ausgebildet sein, welcher ein grobes Gewinde aufweist, mit dessen Hilfe er in den Erdboden eingeschraubt werden kann. Der Ankerstiel kann auch als Betonanker ausgebildet sein, welcher sich besonders gut in Beton einbetten lässt. Schließlich kann der Ankerstiel optional höhenverstellbar sein, zum Beispiel indem er aus zwei Teilstielen besteht, die über eine Hülse mit Innengewinde miteinander verbunden sind.
- Einen am oberen Ende des vorstehend genannten Ankerstiels befestigten Winkel mit zwei oder mehr Schenkeln, wobei mindestens zwei der Schenkel zueinander senkrecht stehen. Vorzugsweise steht mindestens einer der Schenkel des Winkels mit seiner Fläche senkrecht zur Achse des Ankerstiels, so dass er als Auflage für Kanthölzer dienen kann. Typischerweise ist der Winkel über diesen quer zum Ankerstiel liegenden Schenkel mit dem Ankerstiel verbunden.

Der Bodenanker ist dadurch gekennzeichnet, dass in mindestens einem der genannten Schenkel des Winkels mindestens vier Löcher für die Befestigung von zwei im Bereich dieses Schenkels stirnseitig aneinanderstoßende, horizontal verlaufende Kanthölzer vorhanden sind, wobei pro Kantholz mindestens zwei Schraublöcher zur Befestigung diese Kantholzes vorgesehen sein sollen. Der Ausdruck "horizontal verlaufend" ist in diesem Zusammenhang auf die typische Montagesituation bezogen, bei welcher der Ankerstiel senkrecht im Untergrund steht (allgemein ausgedrückt verlaufen die Kanthölzer somit quer zur Richtung des Ankerstiels).

Der beschriebene Bodenanker hat den Vorteil, dass er den Aufbau von Konstruktionen aus horizontal verlegten Kanthölzern erleichtert, indem an der Stelle eines Bodenankers zwei derartige Kanthölzer stirnseitig aneinander stoßen können. Beide Kanthölzer werden dann vom Winkel des Bodenankers gestützt und können beide sicher über mindestens zwei Schraublöcher mit dem Bodenanker verbunden werden.

Gemäß einer bevorzugten Ausführungsform des Bodenankers sind in dem mindestens einen Schenkel, welcher die Schraublöcher trägt, vier Schraublöcher in den Ecken eines Rechteckes bzw. Quadrates angeordnet. Darüber hinaus kann optional ein zentrales Schraubloch vorgesehen sein (zum Beispiel im Mittelpunkt des genannten Rechteckes). Das zentrale Schraubloch kann dazu verwendet werden, ein durchgehendes Kantholz mittig und mit möglichst geringem Aufwand am Bodenanker zu befestigen.

Der Winkel kann insbesondere L-förmig sein, wobei der mit dem Ankerstiel verbundene (typischerweise horizontale) Schenkel vorzugsweise länger als der andere, freie Schenkel des Winkels ist. Auf diese Weise ist es möglich, den Bodenanker für Kanthölzer von unterschiedlichen Standardmaßen zu verwenden. Der kürzere Schenkel ist dabei insbesondere kleiner oder gleich der minimalen Seitenbreite der zu verwendenden Kanthölzer, während der längere Schenkel zwischen der minimal und der maximal vorkommenden Seitenbreite der Kanthölzer liegt. Werden dann zum Beispiel quadratische Kanthölzer mit der minimalen Seitenbreite eingesetzt, so steht der längere Schenkel des Winkels etwas über, der kürzere senkrechte Schenkel jedoch nicht, so dass nach oben kein Überstand über das Kantholz entsteht. Werden dagegen quadratische Kanthölzer mit der maximalen Seitenbreite eingesetzt, so finden diese auf dem horizontalen, längeren Schenkel immer noch eine ausreichende Stütze.

Gemäß einer alternativen Ausgestaltung kann der Winkel auch U-förmig sein. In diesem Falle tragen vorzugsweise die einander gegenüberliegenden, parallelen Endschenkel des Winkels die Schraublöcher für die Befestigung von Kanthölzern. Weiterhin ist ein solcher Winkel vorzugsweise über seinen Mittelschenkel mit dem Ankerstiel verbunden. In dem U-förmigen Winkel können Kanthölzer, deren Breite dem Abstand der freien Schenkel entspricht, besonders sicher gelagert werden.

Bei einem U-förmigen Winkel kann der Abstand der parallelen Endschenkel insbesondere auch verstellbar sein. In diesem Falle ist der Bodenanker für Kanthölzer verschiedener Seitenbreiten verwendbar.

Der Winkel kann optional einstückig mit dem Ankerstiel verbunden sein, insbesondere stoffschlüssig durch Schweißen oder dergleichen.

Im Folgenden wird die Erfindung mit Hilfe der Figuren beispielhaft erläutert. Es zeigt:
- Fig. 1: einen erfindungsgemäßen Bodenanker mit L-förmigem Winkel und Schraubanker;
- Fig. 2: die Lagerung eines durchgehenden Kantholzes auf dem Bodenanker von Figur 1;
- Fig. 3: die Lagerung von zwei aneinanderstoßenden Kanthölzern auf dem Bodenanker von Figur 1;
- Fig. 4: den Aufbau einer Holzterrasse mit einem Bodenanker nach Figur 1;
- Fig. 5: einen Bodenanker mit einem L-förmigen Winkel und einem Betonanker;
- Fig. 6: einen Bodenanker mit einem U-förmigen Winkel und einem Schraubanker;
- Fig. 7: einen Bodenanker mit einem U-förmigen Winkel und einem Betonanker;
- Fig. 8: einen Bodenanker mit einem U-förmigen Winkel verstellbarer Weite mit einem Schraubanker;
- Fig. 9: einen Bodenanker mit einem U-förmigen Winkel verstellbarer Weite und einem Betonanker verstellbarer Höhe.

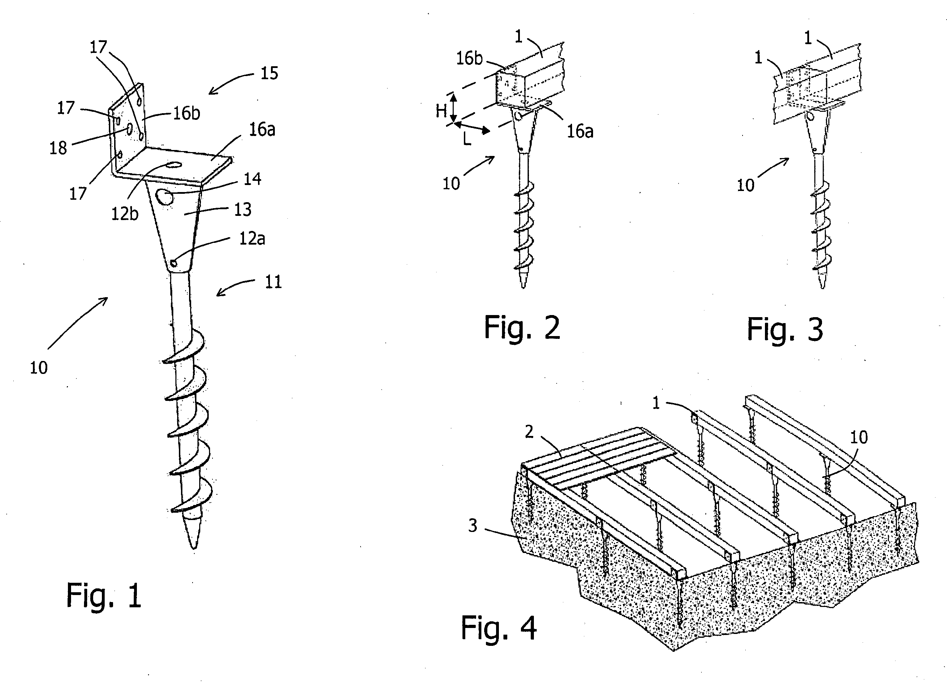

Ein Bodenanker 10 gemäß einer bevorzugten Ausführungsform der Erfindung ist in den Figuren 1 bis 4 gezeigt. Der Bodenanker 10 enthält im unteren Teil einen Ankerstiel 11, welcher als Schraubanker mit einem zylindrischen Dorn und einer hierum spiralförmig umlaufenden Schnecke ausgebildet ist. Am oberen Ende schließt der Schraubanker 11 mit einem Konus 13 ab, mit welchem das Erdreich beim Einschrauben des Bodenankers 10 verdichtet wird. Zur Erleichterung des Einschraubens weist der Konus 13 eine Durchgangsbohrung 14 zum Durchstecken einer Einschraubhilfe (Stange etc.) auf.

Am oberen Ende des Schraubankers 11 ist ein L-förmiger Winkel 15 z.B. durch Schweißen befestigt. Ein Schenkel 16a dieses Winkels 15 steht dabei quer zur Achse des Schraubankers 11, das heißt im typischen endmontierten Zustand horizontal, während der zweite Schenkel 16b senkrecht nach oben weist. In der Mitte des horizontalen Schenkels 16a ist ein Loch 12b, das ebenso wie das Loch 12a im Kegel 13 als Ablaufbohrung für Zink beim Verzinken des gesamten Bodenankers sowie als Wasserablauf dient. Der zweite, freie Schenkel 16b weist vier Schraublöcher 17 auf, die in den Ecken eines (gedachten) Rechteckes paarweise senkrecht übereinander angeordnet sind. Des Weiteren weist der Schenkel 16b ein zentrales Schraubloch 18 auf.

In Figur 2 ist der Bodenanker 10 mit einem ganzflächig darauf aufgelegten Kantholz 1 quadratischen Querschnitts dargestellt. Hieraus wird ersichtlich, dass die beiden Schenkel 16a, 16b unterschiedliche Länge aufweisen, wobei die Höhe H des vertikalen Schenkels 16b kleiner ist als die Länge L des horizontalen Schenkels 16a. Durch diese ungleich langen Schenkel wird der Winkel zur Aufnahme von Kanthölzern unterschiedlicher Abmessungen geeignet, wobei die vertikale Höhe H des Schenkels 16b typischerweise die minimale verwendbare Seitenbreite der Kanthölzer und die Länge L des Schenkels 16a die maximale Breite der Kanthölzer widerspiegelt. Wenn sich die Seitenbreite der Kanthölzer 1 zwischen den Grenzen H und L bewegt, ist einerseits sichergestellt, dass der vertikale Schenkel 16b niemals nach oben über das Kantholz 1 übersteht, und andererseits, dass das Kantholz 1 ganz auf einem Schenkel 16a aufliegt und von diesem vollflächig unterstützt wird. Typische Werte für die Schenkelmaße sind z.B. H = 65 mm und L = 90 mm, wobei in diesem Falle Standard-Kanthölzer zwischen den Abmessungen 70 x 70 mm und 90 x 90 mm auf dem Bodenanker 10 montiert werden können.

Die Fixierung des Kantholzes 1 kann bei dem Aufbau von Figur 2 über die vier Schraublöcher 17 und/oder das zentrale Schraubloch 18 erfolgen. Figur 3 zeigt in diesem Zusammenhang einen zweiten wichtigen Anwendungsfall, bei dem zwei stirnseitig aneinanderstoßende Kanthölzer 1 auf dem Bodenanker 10 gelagert sind. Erkennbar ist, dass bei etwa mittiger Lage des Stoßes zwischen den Kanthölzern jeweils zwei vertikal übereinander liegende Schraublöcher 17 im vertikalen Schenkel des Winkels vorhanden sind, durch welche die beiden Kanthölzer jeweils sicher mit dem Winkel verbunden werden können.

Figur 4 zeigt die Verwendung des Bodenankers 10 zum Aufbau einer Holzterrasse. Dabei werden Gruppen von (im Beispiel drei) Bodenankern 10 jeweils in einer Linie in den Boden 3 geschraubt, so dass auf ihren Winkeln ein Kantholz 1 gelagert werden kann. Auf diese Weise werden mehrere (im Beispiel fünf) Kanthölzer 1 parallel nebeneinander montiert. Auf die Kanthölzer 1 können dann quer verlaufende Holzfliesen 2 als Terrassenoberfläche befestigt werden.

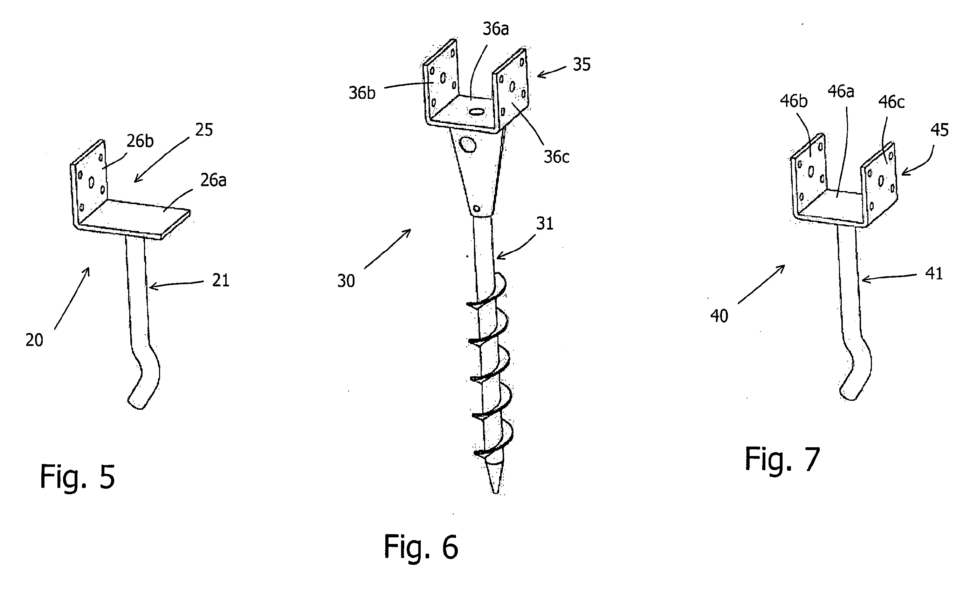

Figur 5 zeigt einen alternativen Bodenanker 20, bei welchem auf einem stangenförmigen Betonanker 21 mit einer leichten Biegung am unteren Ende ein Winkel 25 entsprechend dem Winkel 15 von Figur 1 befestigt ist. Ein solcher Bodenanker eignet sich insbesondere dazu, in einem Betonfußboden eingebettet zu werden.

Der in Figur 6 gezeigte Bodenanker 30 weist ebenso wie der Bodenanker 10 von Figur 1 einen Schraubanker 31 auf, wobei jedoch am oberen Ende des Schraubankers ein U-förmiger Winkel 35 befestigt ist. Der Winkel 35 weist einen Mittelschenkel 36a sowie beidseitig hiervon senkrecht nach oben stehende Endschenkel 36b und 36c auf. Die Endschenkel 36b, 36c sind ähnlich wie der Schenkel 16b von Figur 1 mit Schraublöchern versehen.

Bei dem Bodenanker 40 von Figur 7 ist ein U-förmiger Winkel 45 (entsprechend dem Winkel 35 von Figur 6) mit einem Betonanker 41 verbunden.

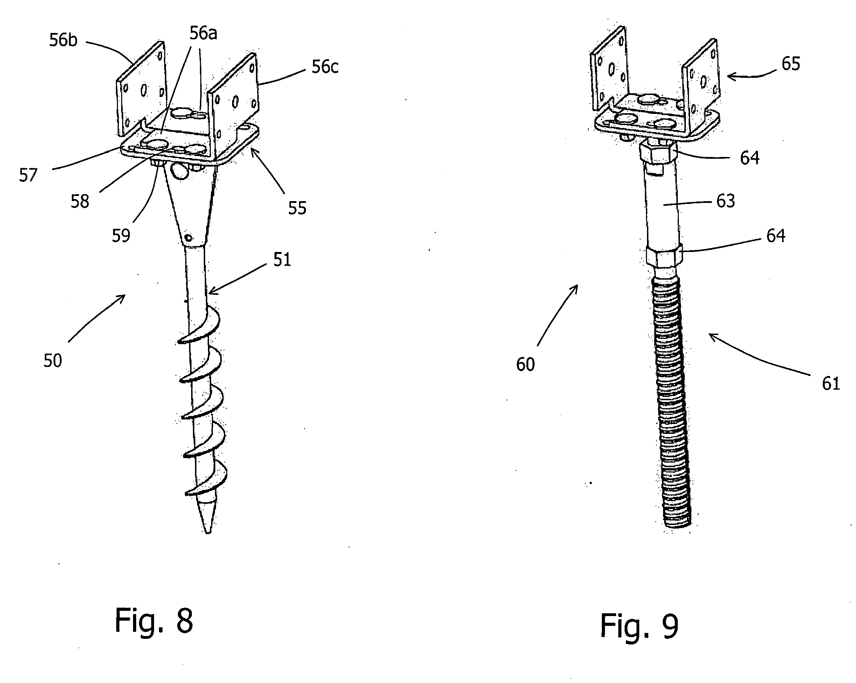

Figur 8 zeigt einen Bodenanker 50, welcher einen Schraubanker 51 (entsprechend dem Schraubanker 11 von Figur 1) aufweist. An der Oberseite des Schraubankers 51 befindet sich ein U-förmiger Winkel 55, dessen vertikale Schenkel 56b und 56c in ihrem Abstand zueinander verstellbar sind. Im Übrigen sind diese Schenkel wie bei Figur 1 mit Schraublöchern versehen. Die Verstellbarkeit des Abstands wird dadurch erreicht, dass die Schenkel 56b, 56c jeweils eine senkrecht abstehende Lasche 56a aufweisen, in der sich Langlöcher 58 befinden.

Durch die Langlöcher 58 können die Laschen 56a dann mittels Schrauben 59 in Schraublöchern der Abschlussplatte am oberen Ende des Schraubankers 51 befestigt werden, wobei die horizontale Position entsprechend der Erstreckung des Langloches 58 veränderlich ist.

Figur 9 zeigt einen Bodenanker 60, welcher einen abstandsveränderlichen, U-förmigen Winkel 65 entsprechend demjenigen von Figur 8 aufweist. Dieser Winkel 65 ist mit einem dreiteiligen Ankerstiel 61 verbunden, der in seinem unteren Abschnitt mit Riefen zur sicheren Fixierung in einem Betonboden versehen ist. Im oberen Bereich weist der Ankerstiel 61 einen Mechanismus zur Längenveränderung auf, welcher eine Hülse 63 mit endseitigen Sechskanten 64 zum Ansetzen eines Schraubenschlüssels umfasst. Die Hülse 63 weist in ihrem Inneren ein Linksgewinde bzw. von der anderen Seite her ein Rechtsgewinde auf, in welche ein unteres bzw. ein oberes Teil des Ankerstiels 61 mit komplementärem Gewinde eingeschraubt sind. Eine Drehung der Hülse 63 in eine bestimmte Drehrichtung führt dann zu einem gleichmäßigen Heraus- bzw. Hereinschrauben beider Teile des Ankerstiels 61.

## Patentansprüche

1. Bodenanker (10, 20, 30, 40, 50, 60) zur Halterung von Kanthölzern (1), umfassend
- einen im Boden befestigbaren Ankerstiel (11, 21, 31, 41, 51, 61);
- einen am oberen Ende des Ankerstiels befestigten Winkel (15, 25, 35, 45, 55, 65) mit zwei zueinander senkrecht stehenden Schenkeln (16a, 16b, 26a, 26b, 36a, 36b, 36c, 46a, 46b, 46c, 56a, 56b, 56c),
**dadurch gekennzeichnet, dass** in mindestens einem der Schenkel (16b, 26b, 36b, 36c, 46b, 46c, 56b, 56c) mindestens vier Schraublöcher (17) vorhanden und so angeordnet sind, dass für die Befestigung von zwei im Bereich des Schenkels aneinanderstoßenden, horizontal verlaufenden Kanthölzern (1) mindestens zwei Schraublöcher (17) pro Kantholz vorhanden sind.

2. Bodenanker nach Anspruch 1,
**dadurch gekennzeichnet, dass** in mindestens einem der Schenkel (16b, 26b, 36b, 36c, 46b, 46c, 56b, 56c) vier Schraublöcher (17) in den Ecken eines Rechtecks und darüber hinaus vorzugsweise ein zentrales Schraubloch (18) angeordnet sind.

3. Bodenanker nach Anspruch 1 oder 2,
**dadurch gekennzeichnet, dass** der Winkel (15, 25) L-förmig ist, wobei der mit dem Ankerstiel (11, 21) verbundene Schenkel (16a, 26a) länger als der freie Schenkel (16b, 26b) ist.

4. Bodenanker nach Anspruch 1 oder 2,
**dadurch gekennzeichnet, dass** der Winkel (35, 45, 55, 65) U-förmig ist.

5. Bodenanker nach Anspruch 4,
**dadurch gekennzeichnet, dass** der Abstand der parallelen Endschenkel (56b, 56c, 66b, 66c) verstellbar ist.

6. Bodenanker nach mindestens einem der Ansprüche 1 bis 5,
**dadurch gekennzeichnet, dass** der Winkel (15, 25, 35, 45) einstückig mit dem Ankerstiel (11, 21, 31, 41) verbunden ist.

7. Bodenanker nach mindestens einem der Ansprüche 1 bis 6,
**dadurch gekennzeichnet, dass** der Ankerstiel ein Schraubanker (11, 31, 51) ist.

8. Bodenanker nach mindestens einem der Ansprüche 1 bis 6,
**dadurch gekennzeichnet, dass** der Ankerstiel ein Betonanker (21, 41, 61) ist.

9. Bodenanker nach mindestens einem der Ansprüche 1 bis 8,
**dadurch gekennzeichnet, dass** der Ankerstiel (61) höhenverstellbar ist.

## Claims

1. Ground anchor (10, 20, 30, 40, 50, 60) for retaining timber beams (1), comprising:
- an anchor support (11, 21, 31, 41, 51, 61 ) which can be secured in the ground;
- a bracket (15, 25, 35, 45, 55, 65) which is secured to the upper end of the anchor support and which has two mutually perpendicular members (16a, 16b, 26a, 26b, 36a, 36b, 36c, 46a, 46b, 46c, 56a, 56b, 56c),
**characterised in that**, in at least one of the members (16b, 26b, 36b, 36c, 46b, 46c, 56b, 56c), there are provided at least four screw holes (17) which are arranged in such a manner that, in order to secure two horizontal timber beams (1) which abut each other in the region of the member, at least two screw holes (17) are provided per timber beam.

2. Ground anchor according to claim 1,
**characterised in that** there are arranged, in at least one of the members (16b, 26b, 36b, 36c, 46b, 46c, 56b, 56c), four screw holes (17) in the corners of a rectangle and preferably also a central screw hole (18).

3. Ground anchor according to claim 1 or 2,
**characterised in that** the bracket (15, 25) is L-shaped, the member (16a, 26a) which is connected to the anchor support (11, 21) being longer than the free member (16b, 26b).

4. Ground anchor according to claim 1 or 2,
**characterised in that** the bracket (35, 45, 55, 65) is U-shaped.

5. Ground anchor according to claim 4,
**characterised in that** the spacing of the parallel end members (56b, 56c, 66b, 66c) is adjustable.

6. Ground anchor according to at least one of claims 1 to 5,
**characterised in that** the bracket (15, 25, 35, 45) is integrally connected to the anchor support (11, 21, 31, 41).

7. Ground anchor according to at least one of claims 1 to 6,
**characterised in that** the anchor support is a screw-type anchor (11, 31, 51).

8. Ground anchor according to at least one of claims 1 to 6,
**characterised in that** the anchor support is a concrete anchor (21, 41, 61).

9. Ground anchor according to at least one of claims 1 to 8,
**characterised in that** the anchor support (61) can be adjusted in terms of height.

## Revendications

1. Dispositif (10, 20, 30, 40, 50, 60) d'ancrage au sol pour supporter des bois équarris (1), comprenant
- un fût d'ancrage (11,21,31,41,51,61) pouvant être fixé dans le sol ;
- une cornière (15, 25, 35, 45, 55, 65) fixée à l'extrémité supérieure dudit fût d'ancrage, et munie de deux branches (16a, 16b, 26a, 26b, 36a, 36b, 36c, 46a, 46b, 46c, 56a, 56b, 56c) perpendiculaires l'une à l'autre,
**caractérisé par** la présence, dans au moins l'une des branches (16b, 26b, 36b, 36c, 46b, 46c, 56b, 56c), d'au moins quatre trous de boulonnage (17) disposés de telle sorte qu'au moins deux trous de boulonnage (17) soient présents, pour chaque bois équarri, en vue de la fixation de deux bois équarris (1) s'étendant horizontalement et en butée mutuelle dans la région de ladite branche.

2. Dispositif d'ancrage au sol selon la revendication 1,
**caractérisé par le fait que**, dans au moins l'une des branches (16b, 26b, 36b, 36c, 46b, 46c, 56b, 56c), quatre trous de boulonnage (17) sont situés dans les coins d'un rectangle, un trou central de boulonnage (18) étant, de préférence, prévu en outre.

3. Dispositif d'ancrage au sol selon la revendication 1 ou 2,
**caractérisé par le fait que** la cornière (15, 25) est configurée en L, la branche (16a, 26a), reliée au fût d'ancrage (11, 21), étant plus longue que la branche libre (16b, 26b).

4. Dispositif d'ancrage au sol selon la revendication 1 ou 2,
**caractérisé par le fait que** la cornière (35, 45, 55, 65) est configurée en U.

5. Dispositif d'ancrage au sol selon la revendication 4,
**caractérisé par le fait que** la distance, séparant les branches extrêmes parallèles (56b, 56c, 66b, 66c), peut être réglée.

6. Dispositif d'ancrage au sol selon au moins l'une des revendications 1 à 5,
**caractérisé par le fait que** la cornière (15, 25, 35, 45) est reliée d'un seul tenant au fût d'ancrage (11, 21, 31, 41).

7. Dispositif d'ancrage au sol selon au moins l'une des revendications 1 à 6,
**caractérisé par le fait que** le fût d'ancrage est une ancre vissable (11, 31, 51).

8. Dispositif d'ancrage au sol selon au moins l'une des revendications 1 à 6,
**caractérisé par le fait que** le fût d'ancrage est une ancre à béton (21, 41, 61).

9. Dispositif d'ancrage au sol selon au moins l'une des revendications 1 à 8,
**caractérisé par le fait que** le fût d'ancrage (61) est réglable en hauteur.
